# EUROPEAN PATENT SPECIFICATION

(11) **EP 1 938 713 B1**
(45) Date of publication and mention of the grant of the patent: **26.02.2014**
(21) Application number: 06781886.4
(22) Date of filing: 28.07.2006
(51) Int. Cl.: B60N 2/66, B60N 2/70

(54) **SEAT STRUCTURE**
SITZSTRUKTUR
STRUCTURE DE SIÈGE

(30) Priority: 18.10.2005 JP 2005303740; 02.12.2005 JP 2005350067
(43) Date of publication of application: 02.07.2008
(73) Proprietor: Delta Tooling Co., Ltd., Hiroshima-shi Hiroshima 736-0084 (JP)
(72) Inventor: FUJITA, Etsunori, Hiroshima-shi, Hiroshima 7360084 (JP); OCHIAI, Naoki, Hiroshima-shi, Hiroshima 7360084 (JP)
(74) Representative: HOFFMANN EITLE
(86) International application number: PCT/JP2006/314976
(87) International publication number: WO 2007/046177

(56) References cited:
- EP-A1- 0 575 243
- EP-A1- 0 904 976
- EP-A2- 1 415 853
- GB-A- 458 925
- JP-A- 2004 033 760
- JP-A- 2005 211 091
- JP-U- 06 031 549
- US-A- 5 868 466

## Description

### Technical Field

The present invention relates to a seat structure. Embodiments of the seat structure are applicable to transportation devices such as aircrafts, trains, ships, forklifts and vehicles, particularly to a seat structure of aircrafts and trains in which plural seats are aligned in a longitudinal direction to provide seating space (leg room space) wider and improve the comfort of the seats.

### Background Art

In an aircraft, for example, a number of seats are continuously provided in a longitudinal direction to arrange a predetermined number of seats in a limited space. The seating space of each passenger is thus limited to be a predetermined size. In particular, there has been a problem that, when a passenger in a front seat reclines its seat backward to take a resting posture, the leg room (footrest) space of a passenger in a rear seat is significantly limited and this causes deterioration in comfort. In view of this problem, regarding such an aircraft, an effort has been required to maintain a wider seating space including the leg room (footrest) space between the seat and the front seat to improve passengers' comfort. On the other hand, some drivers seated on a vehicle seat may prefer a relatively upright posture but others may prefer a more reclined posture. In both cases, since the driver has to drive without any problem, he cannot fully recline his seat back. In such a situation, when a driver rests in a parking for a short period of time, the driver often rests his or her body with his or her eyes closed in a posture almost the same as the posture for driving since he may fall asleep too deeply if the seat back is fully reclined. In this case, it is desired to obtain a sufficient relaxed state, if the driver just closes his or her eyes, both in the relatively upright posture and a slightly reclined posture. In other words, it has been desired to develop a seat capable of maintaining a high wakeful state while the driver's eyes are opened not to disturb his or her driving and providing its back angle adjustable to smoothly relax the driver when the driver's eyes are closed.

GB 458,925 which shows a seat structure with the features of the preamble of claim 1 relates to seats and in particular motor vehicle driving seats of the type in which the seat is free to move in a forward and backward direction and is pivotally connected with a backrest which is also itself pivoted in fixed supports about a transverse axis.

EP 0 904 976 A1 relates to a seating structure for a vehicle with a seat and a backrest and motorized means for adjusting the axial position of the seat and of the angle of inclination of the backrest with respect to the seat.

EP 0 575 243 A1 relates to a front seat of a vehicle with a seating structure mounted on a base using two oblique con-rods and a backrest pivotably mounted with respect to it.

### Disclosure of the Invention

### Problem to be solved by the Invention

The present invention has been made in view of the above problems and has an object to provide a seat structure applicable to both a normal posture and a resting posture, in which a sufficiently relaxed resting posture is available, an excellent comfort is obtained while seated, and, even in the resting posture, it does not limit a leg room space of a seat provided in back of the seat. Further, the present invention has an object to provide a vehicle seat capable of maintaining a high wakeful state of a driver while his or her eyes are opened not to disturb his or her driving and providing its back angle adjustable to smoothly relax the driver when his or her eyes are closed, both in a relatively upright posture and a slightly reclined posture.

### Means to solve the Problem

In order to solve the above problems, the present invention of claim 1 provides a seat structure having a seat reference point adjustor configured to shift a seat reference point in a resting posture to be anterior to a seat reference point in a normal posture, wherein a seating surface angle of a seat cushion and a tilting angle of a seat back seating surface are adjustable between a normal posture support mode with the seat reference point in the normal posture, and a resting posture support mode with the seat reference point in the resting posture, characterized in that in the normal posture support mode, a seat back angle is set to be from 10 to 14 degrees, the seat cushion seating surface angle is set to be from 12 to 15 degrees, and the tilting angle of the seat back seating surface with respect to the seat cushion seating surface is set to be a value equal to or more than 85 degrees and less than 90 degrees, and that in the resting posture support mode, the seat back angle is set to be from 30 to 34 degrees, the seat cushion seating surface angle is set to be from 22 to 28 degrees, and the tilting angle of the seat back seating surface with respect to the seat cushion seating surface is set to be a value equal to or more than 95 degrees and less than 100 degrees, and further comprising a lumbar support being provided to the seat back, the lumbar support comprising a flexible plate member made of synthetic resin and a pair of bulges, which have center portions fixed to one surface of the plate member, wherein one of the two bulges is provided near a position corresponding to the third lumbar vertebra of an occupant and the other one of the bulges is provided near a position corresponding to an upper position of the pelvis of the occupant, as sandwiching the fourth lumbar vertebra.

According to another aspect of the invention, there is provided a vehicle seat structure comprising a seat reference point adjustor configured to shift a seat reference point in a first posture to be anterior to a seat reference point in a second posture, wherein a tilting angle of a seat back seating surface is adjustable between a first posture support mode with the seat reference point in the first posture, and a second posture support mode with the seat reference point in the second posture, characterized in that a seat cushion seating surface angle is set to be from 24 to 28 degrees, in the first posture support mode a seat back angle is from 10 to 14 degrees, in the second posture support mode the seat back angle is from 30 to 34 degrees; and further comprising a lumbar support being provided to the seat back and comprising a flexible plate member made of synthetic resin and a pair of bulges, which have center portions fixed to one surface of the plate member, wherein one of the two bulges is provided near a position corresponding to the third lumbar vertebra of an occupant and the other one of the bulges is provided near a position corresponding to an upper position of the pelvis of the occupant, as sandwiching the fourth lumbar vertebra.

### Effect of the Invention

According to embodiments of the present invention, the seat reference point adjustor for shifting the seat reference point in the resting posture anterior to the seat reference point in the normal posture is provided. This allows taking the resting posture without tilting the seat back backward. Since the seat back is not needed to be tilted backward, a leg room (footrest) space of a rear seat is not limited.

Preferably, the seat reference point is adjusted so that, in the normal posture support mode, with the seat reference point in the normal posture, the back angle is set to be from 10 to 14 degrees, the seat cushion seating surface angle is set to be from 12 to 15 degrees, and the tilting angle of the seat back seating surface with respect to the seat cushion seating surface is set to be a value equal to or more than 85 degrees and less than 90 degrees, and, in the resting posture mode, with the seat reference point in the resting posture, the back angle is set to be from 30 to 34 degrees, the seat cushion seating surface angle is set to be from 22 to 28 degrees, and the tilting angle of the seat back seating surface with respect to the seat cushion seating surface is set to be a value equal to or more than 95 degrees and less than 100 degrees.

The normal posture is to be a posture for some works such as reading, eating and PC operations and these works can be executed easily when the back angle, seating surface angle, and tilting angle of the seat back seating surface with respect to the seat cushion seating surface are set within the above ranges. On the other hand, in aircrafts for domestic flights, it is not required to provide passengers a resting posture that lulls them into deep sleep. This is because seating time of such domestic flights is for one to three hours. If the seats are designed to lull passengers into deep sleep, the passengers are not comfortably awakened when they get off the aircraft so that they cannot smoothly shift to next action. Thus, in view of the seating time, a seat design for providing a sleep pattern realizing a smooth introduction into sleep and a comfortable awakening is desired. To achieve such a seat design, the back angle, seating surface angle, tilting angle of the seat back seating surface with respect to the seat cushion seating surface in a resting posture are preferably set to be within the above ranges. With this structure, the leg room (footrest) space of a rear seat is not limited and the occupant's abdominal muscles and back muscles are balanced so that a state without useless tensions can be obtained. Here, the occupant's abdominal breathings are easily performed and this lulls the occupant into sleep smoothly and the occupant can be awakened comfortably. In particular, in the resting posture mode, preferably, the back angle is set to be 33 degrees the seat cushion seating surface angle is set to be 25 degrees and the tilting angle of the seat back seating surface with respect to the seat cushion seating surface is set to be 98 degrees.

On the other hand, in a vehicle seat structure, in which the seat cushion seating surface angle is set to be 24 to 28 degrees, preferably 25 degrees, the seat reference point adjustor configured to shift the seat reference point in the first posture anterior to the seat reference point in the second posture is provided and the tilting angle of the seat back seating surface is adjustable between the first posture support mode in which, with the seat reference point in the first posture, the back angle is from 10 to 14 degrees, preferably 12.5 degrees, and the second posture support mode in which, with the seat reference point in the second posture, the back angle is from 30 to 34 degrees, preferably 33 degrees.

In other words, in this vehicle seat structure, since the seat cushion seating surface angle is made wide, even when the back angle is set in the first posture support mode which is a relatively upright posture, the occupant can be in a high wakeful state while his or her eyes are opened and a relaxed state while his or her eyes are closed. Similarly, when the back angle is set in the second posture support mode and the seat back is slightly reclined, the occupant can be in the high wakeful state while his eyes are opened and the relaxed state while his eyes are closed. That is, vehicle seat structures of the present invention can allow an occupant to keep a wakeful state when his or her eyes are opened and a resting posture (relaxed state) when his or her eyes are closed in two postures: a relatively upright posture and a slightly reclined posture.

### Brief Description of Drawings

In the following, reference will now be made to the accompanying drawings, which illustrate, by way of example only, ways in which the invention may be put into practice, in which:
FIG. 1 is a conceptual diagram showing a seat structure according to an embodiment of the present invention;
FIG. 2 is a conceptual diagram showing the seat structures of the embodiment, which are arranged in front and rear positions;
FIG. 3 is a conceptual diagram showing a lumbar support used in the seat structure of the above embodiment;
FIG. 4 is a diagram showing a time-series of a power value gradient and a time-series of a maximum Lyapunov index gradient obtained from fingertip volume pulse waves in a test for studying an appropriate angle of a back angle H in a resting posture mode;
FIG. 5 is a diagram showing a distribution ratio of brain waves measured in the test;
FIG. 6 is a diagram showing a time-series of distribution ratio gradient of the brain waves in FIG. 5;

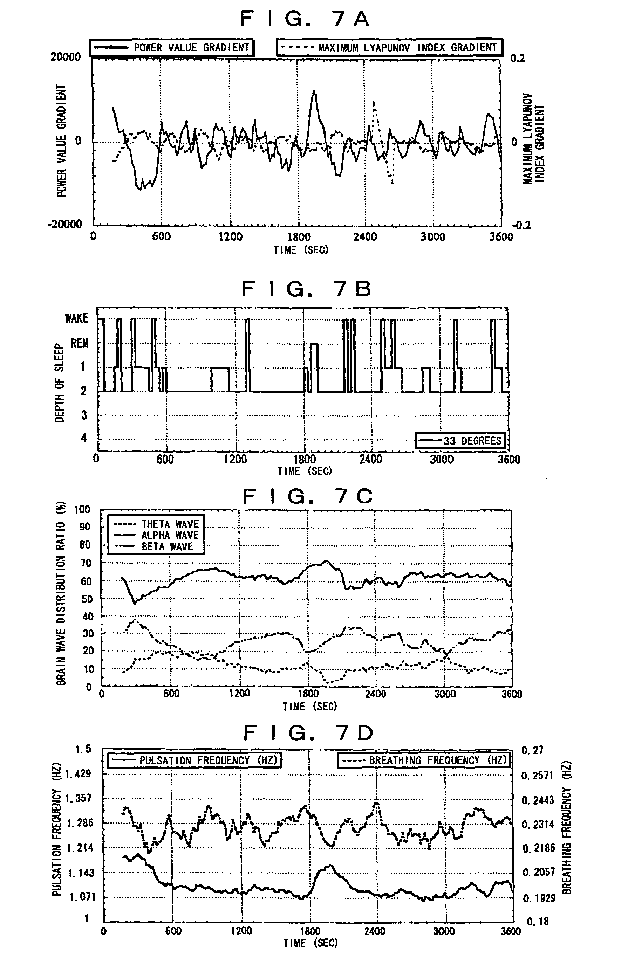

FIGS. 7A to 7D are diagrams showing results of a test in which a subject is made seated on a seat in a condition that its back angle H is 33 degrees, seating surface angle I is 25 degrees, and tilting angle J of a seat back seating surface (line D) with respect to a seat cushion seating surface is 98 degrees; FIG. 7A shows a time-series of a power value gradient and a time-series of a maximum Lyapunov index gradient obtained from fingertip volume pulse waves; FIG. 7B shows time-series changes in depth of sleep; FIG. 7C shows time-series changes in a distribution ratio of the brain waves; FIG. 7D shows time-series changes in the pulsation frequency and breathing frequency;

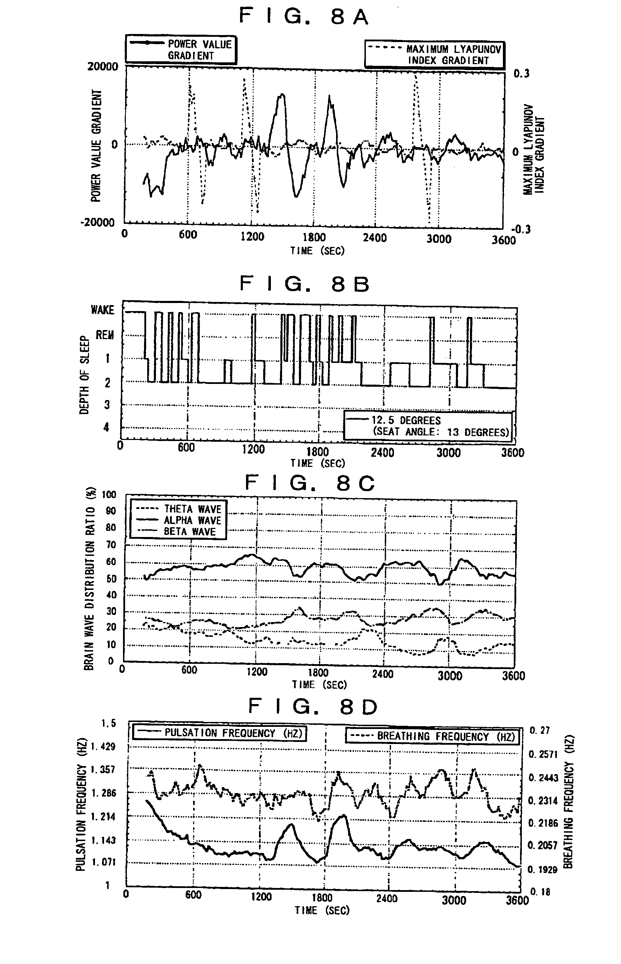

FIGS. 8A to 8D are diagrams showing results of a test in which a subject is made seated on a seat in a condition its back angle E is 12.5 degrees, seating surface angle F is 13 degrees and tilting angle G of a seat back seating surface (line C) with respect to a seat cushion seating surface is 89.5 degrees; FIG. 8A shows a time-series of a power value gradient and a time-series of a maximum Lyapunov index gradient obtained from fingertip volume pulse waves; FIG. 8B shows time-series changes in depth of sleep; FIG. 8C shows time-series changes in a distribution ratio of the brain waves; FIG. 8D shows time-series changes in the pulsation frequency and breathing frequency;
FIGS. 9A to 9D are diagrams showing results of a comparative test, which are measured results when a subject is seated in a conventional aircraft seat in a fully-reclined state; FIG. 9A shows a time-series of a power value gradient and a time-series of a maximum Lyapunov index gradient obtained from fingertip volume pulse waves; FIG. 9B shows time-series changes in depth of sleep; FIG. 9C shows time-series changes in a distribution ratio of the brain waves; FIG. 9D shows time-series changes in the pulsation frequency and breathing frequency;
FIG. 10 is a graph showing a transition of degrees of fatigue obtained based on data of FIGS. 7A to 9D;
FIG. 11 is a graph showing a transition of degrees of awakening;
FIG. 12 is a diagram showing analyses of a time-series frequency of power value gradient;
FIG. 13 is a diagram showing analyses of a time series frequency of maximum Lyapunov index;
FIG. 14 is a conceptual diagram showing a seat structure in which a seating surface angle is fixed to 25 degrees and the back angle is changed to switch between a first posture support mode and a second posture support mode;
FIGS. 15A and 15B are diagrams showing a time-series of a power value gradient and a time-series of a maximum Lyapunov index gradient obtained from fingertip volume pulse waves, time-series changes in depth of sleep, time-series changes in the distribution ratio of the brain waves, and time-series changes in the pulsation frequency and breathing frequency in a test example 3, in which a back angle is set to be 12.5 degrees; FIG. 15A shows the results in a state a subject's eyes are opened; FIG. 15B shows the results in a state the subject's eyes are closed; and
FIGS. 16A and 16B are diagrams showing a time-series of a power value gradient and a time-series of a maximum Lyapunov index gradient obtained from fingertip volume pulse waves, time-series changes in depth of sleep, time-series changes in the distribution ratio of the brain waves, and time-series changes in the pulsation frequency and breathing frequency in the test example 3, in which a back angle is set to be 33 degrees; FIG. 16A shows the results in a state the subject's eyes are opened; FIG. 16B shows the results in a state the subject's eyes are closed.

### Description of the Reference Numerals

10 seat structure
200 lumbar support

### Best Mode for Carrying out the Invention

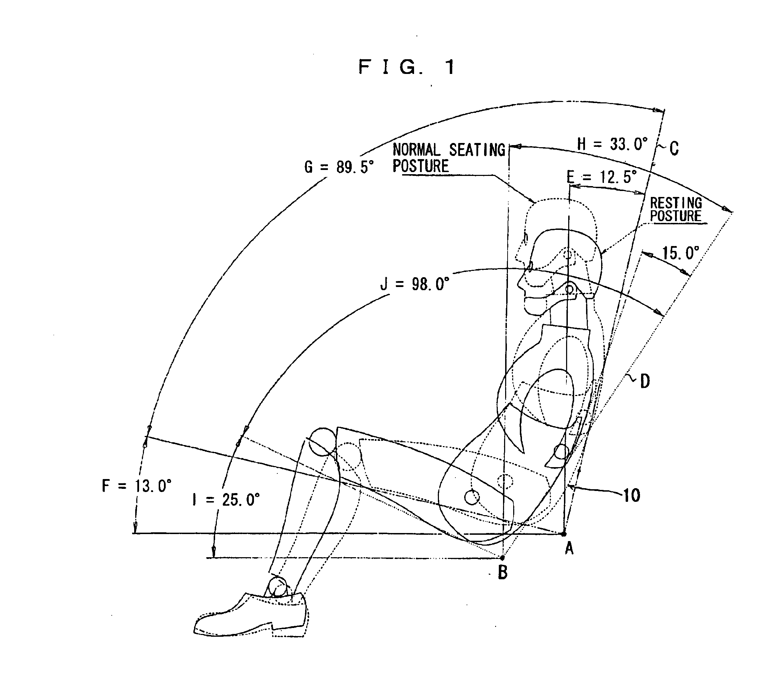

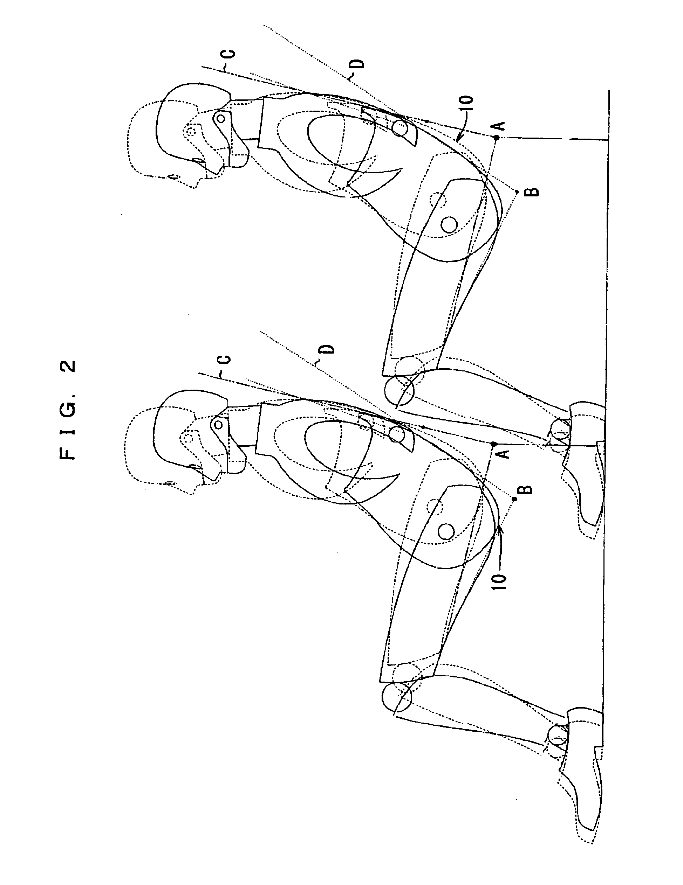

The present invention will be described in more detail based on an embodiment shown in the figures. FIGS. 1 and 2 are diagrams showing a seat structure 10 according to an embodiment of the present invention. The figures show both a state of an occupant in a normal posture mode and a state of the occupant in a resting posture mode. FIG. 1 shows details of back angles, seating surface angles and the like and FIG. 2 shows occupants in a front seat and a rear seat.

As shown in these figures, a seat reference point can be shifted between a seat reference point A used in the normal posture and a seat reference point B used in the resting posture by a seat reference point adjustor. The seat reference point is an intersection of a phantom line in a forward and backward direction and along a seating surface of a seat cushion and a phantom line (that is, a later-described line D) along a lower back seating surface placed lower than a substantially center portion of the seat back in a vertical direction.

The position of a line C along an upper back seating surface placed above the substantially center portion of the seat back in the vertical direction as seen from the side is not changed both in the normal posture mode and resting posture mode. On the other hand, the position of the line D along the lower back seating surface placed lower than the center portion of the seat back in vertical direction changes in the normal posture mode and resting posture mode. In other words, the line D matches with the line C in normal posture mode but, since the seat reference point B moves forward, the line D tilts backward in the resting posture mode compared to the normal posture mode.

In the normal posture mode, with the seat reference point A in the normal posture, the back angle E is set to be 12.5 degrees, the seating surface angle F of the seat cushion is set to be 13 degrees, and the tilting angle G of the seat back seating surface (line C) with respect to the seat cushion seating surface is set to be 89.5 degrees.

In the resting posture mode, with the seat reference point B in the resting posture, the back angle H is set to be 33 degrees, the seating surface angle I of the seat cushion is set to be 25 degrees, and the tilting angle J of the seat back seating surface (line D) with respect to the seat cushion seating surface is set to be 98 degrees. In the resting posture mode, since the seat reference point is shifted forward to the position B, the occupant's backside can slip if only the back angle H is set to be 33 degrees. In view of this point, when the seating surface angle I is set to be 25 degrees and the tilting angle J of the seat back seating surface (line D) with respect to the seat cushion seating surface is set to be 98 degrees in order to prevent the occupant's backside from slipping. With this structure, the occupant's back muscle and abdominal muscle are balanced so that the occupant is relaxed and smooth abdominal breathing are performed.

The above set values are the most preferable angle conditions in the normal posture mode and resting posture mode. However, in the normal posture mode, the back angle can be adjusted in a range from 10 to 14 degrees, the seat cushion seating surface angle F can be adjusted in a range from 12 to 15 degrees, and the tilting angle G of the seat back seating surface (line C) with respect to the seat cushion seating surface can be adjusted to a value equal to or more than 85 and less than 90. Further, in the resting posture mode, the back angle H can be adjusted in a range from 30 to 34 degrees, the seat cushion seating surface angle I can be adjusted in a range from 22 to 28 degrees, and the tilting angle J of the seat back seating surface (line D) with respect to the seat cushion seating surface can be adjusted to a value equal to or more than 95 and less than 100.

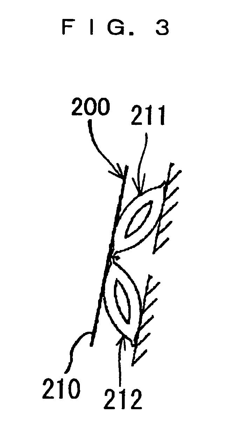

In addition, a lumbar support 200 shown in FIG. 3 is provided to the seat back. The lumbar support 200 has a structure including a flexible plate member 210 made of synthetic resin and a pair of bulges 211, 212, which have center portions fixed to one surface of the plate member 210. Here, one of the two bulges 211, 212 is provided near a position corresponding to the third lumbar vertebra of the occupant and the other of the bulges 211, 212 is provided near a position corresponding to an upper portion of the pelvis, as sandwiching the fourth lumbar vertebra. With this structure, the two bulges 211, 212 function as support points for supporting areas near the third lumbar vertebra and the upper portion of the pelvis. When the occupant's seating posture is switched between the normal and resting posture modes, the supporting pressures applied by the two bulges 211, 212 change accordingly and a high lumbar vertebra portion supportability is maintained as a result.

### (Test Example 1)

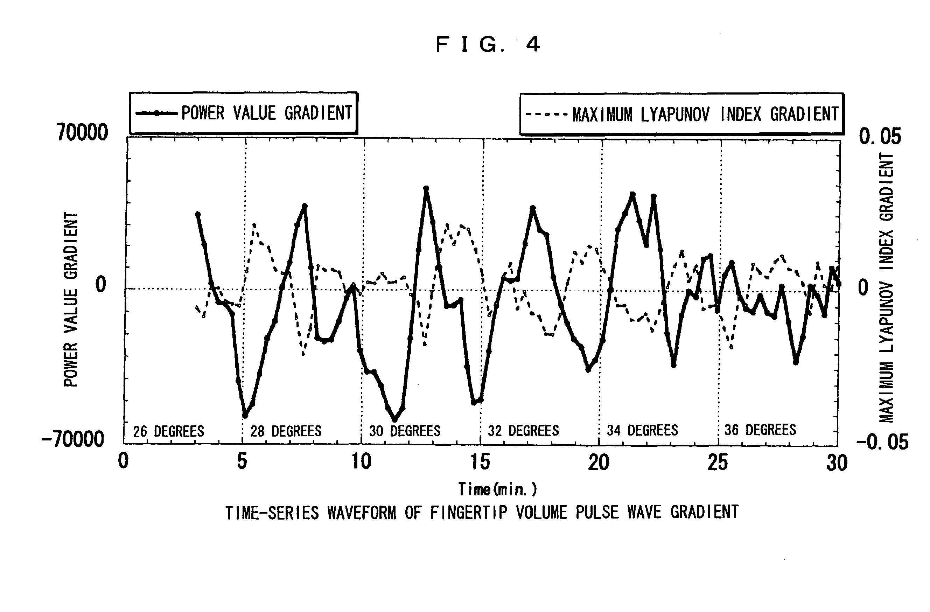

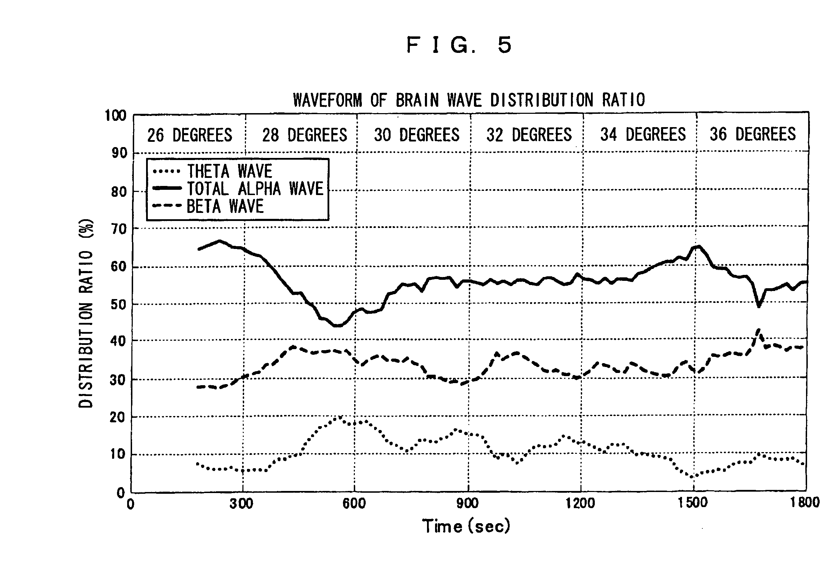

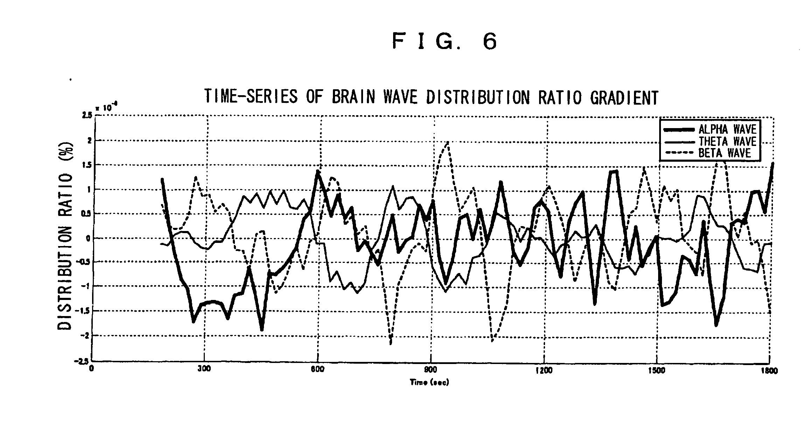

To study an appropriate back angle H of the seat back in the resting posture mode, a subject is made seated and the angle of the seating surface is fixed to 25 degrees. The angle of the seat back (back angle H) is changed by 2 degrees between 26 and 36 degrees in a direction of gravitational force within 30 minutes and fingertip volume pulse waves and brain waves of the subject are measured in a state the subject's eyes are closed. The subject is a healthy male person in his thirties and his falling asleep period is about 10 to 15 minutes. Waiting time in each angle is 300 seconds. The 300-second waiting time gives little bodily fatigue and, since it is shorter than his falling asleep period, the subject does not fall asleep and less influence of bodily changes caused by sleeping can be expected. Further, the length of the waiting time is a period that the subject can maintain his concentration and a minimum period for calculating gradient time-series waveforms based on fingertip volume pulse waves and observing its tendency. Further, the subject is given stimuli by changing the angle of the seat back in every 300 seconds so that his mental burden can be reduced. The results are shown in FIGS. 4 to 6. FIG. 4 shows a time-series of a power value gradient and a time-series of a maximum Lyapunov index gradient, which are obtained from the fingertip volume pulse waves; FIG. 5 shows a distribution ratio of brain waves; and FIG. 6 shows a time-series of the brain wave distribution ratio.

According to the brain wave distribution ratios of the subject, a microsleep was found when the back angle was 28 degrees and an equable wakeful state was maintained when the back angle was from 30 to 34 degrees. When the back angle was 34 degrees and beta wave reacting external stimuli was stable, theta wave reduced and alpha wave increased. This caused an alpha wave-dominated state. Then, when the back angle was made to be 36 degrees, a microsleep occurred again. Next, result of the gradient time-series waveforms obtained from the fingertip volume pulse waves will be described. The time-series waveform of power value gradient shows that a wakeful state was maintained until the back angle was made to be 34 degrees although the wakefulness was temporarily reduced due to microsleeps. Here, between 32 to 34 degrees, its amplitude was small, metabolisms were stable, and the subject was likely to be in a relaxed state. When the angle was in the later in 34 degrees or greater, a sleep state was maintained even while the angle of the seat back was being changed. The time-series waveform of maximum Lyapunov index gradient shows that a tendency of a reduction of wakefulness between 26 and early 30s degrees and a tendency of temporal relieved tiredness because of the microsleep in the first half between later 30s and early 36s degrees. When the angle was late 36s degrees or greater, a reduction of wakefulness was found. Here, hypnagogic symptoms (sleep prediction) occurred during the period of intermediate examinations of 26 to 28 and 34 degrees. The hypnagogic symptoms were characteristic at the beginning; however, in a later half, it was needed to fine the hypnagogic symptoms based on a relation with the time-series waveforms of Lyapunov index since other symptoms were found in the relaxed equable state. Based on these test results, it is considered that, when the angle is between 30 to 34 degrees, the subject has a low metabolism and in a high wakeful state, that is, a state the subject can highly concentrate as being relaxed and can smoothly shift to a sleep state with a small change of his posture. Thus, the back angle H in the resting posture mode is preferably in a range from 30 to 34 degrees, more preferably in a range from 32 to 33 degrees, and most preferably at 33 degrees.

### (Test Example 2)

The same subject is made seated on a seat in a condition that the back angle H is set to be 33 degree, the seating surface angle I is set to be 25 degrees, and the tilting angle J of the seat back seating surface (line D) with respect to the seat cushion seating surface is set to be 98 degrees, and his fingertip volume pulse waves and brain waves are measured for 60 minutes with his eyes closed. The results are shown in FIGS. 7A to 7D. FIG. 7A shows a time-series of power value gradient and a time-series of maximum Lyapunov index gradient obtained from the fingertip volume pulse waves; FIG. 7B shows time-series changes of his sleep depth; FIG. 7C shows time-series changes of the brain wave distribution ratio; and FIG. 7D shows time-series changes of pulsation frequencies and breathing frequencies.

Similarly, the same subject is made seated on a seat in a condition that the back angle E is set to be 12.5 degrees, the seating surface angle F is set to be 13 degrees, and the tilting angle G of the seat back seating surface (line C) with respect to the seat cushion seating surface is set to be 89.5 degrees and his fingertip volume pulse waves and brain waves are measured for 60 minutes with his eyes closed. The results are shown in FIGS. 8A to 8D. FIG. 8A shows a time-series of power value gradient and a time-series of maximum Lyapunov index gradient obtained from the fingertip volume pulse waves; FIG. 8B shows time-series changes of his sleep depth; FIG. 8C shows time-series changes of the brain wave distribution ratio; and FIG. 8D shows time-series changes of pulsation frequencies and breathing frequencies.

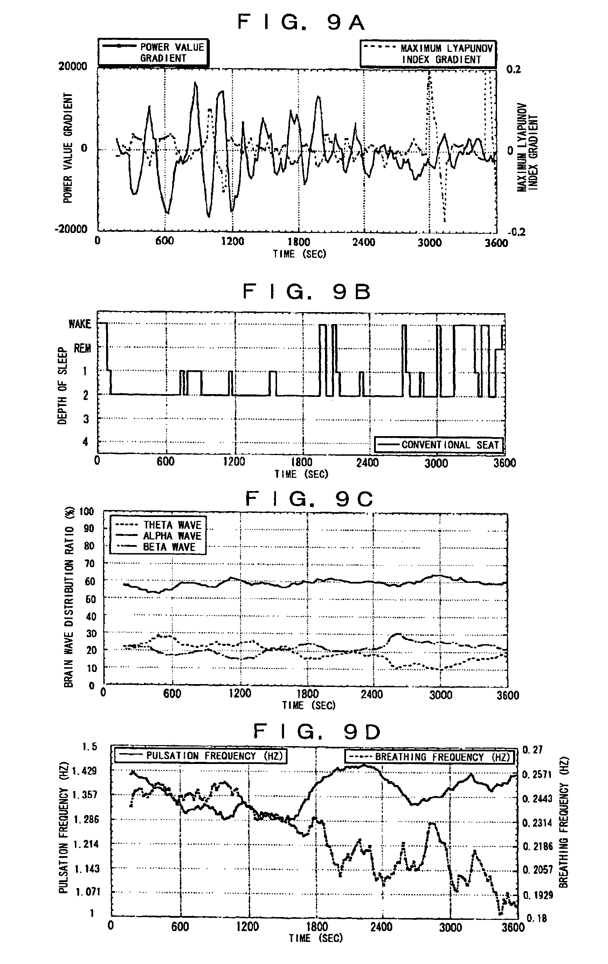

To make a comparison, FIGS. 9A to 9D show measured results in a case that the subject is made seated on a conventional aircraft seat, which is fully reclined. Comparing the case with the back angle H of 33 degrees and the seating surface angle I of 25 degrees and the case with the back angle E of 12.5 degrees and the seating surface angle F of 13 degrees, the subject was awakened more often and the fluctuating range of the breathing frequency and pulsation frequency were larger in the latter case. As a result, the former case can be a more preferable resting posture. In other words, the former case provides a pattern for a smooth falling asleep and a comfortable awakening.

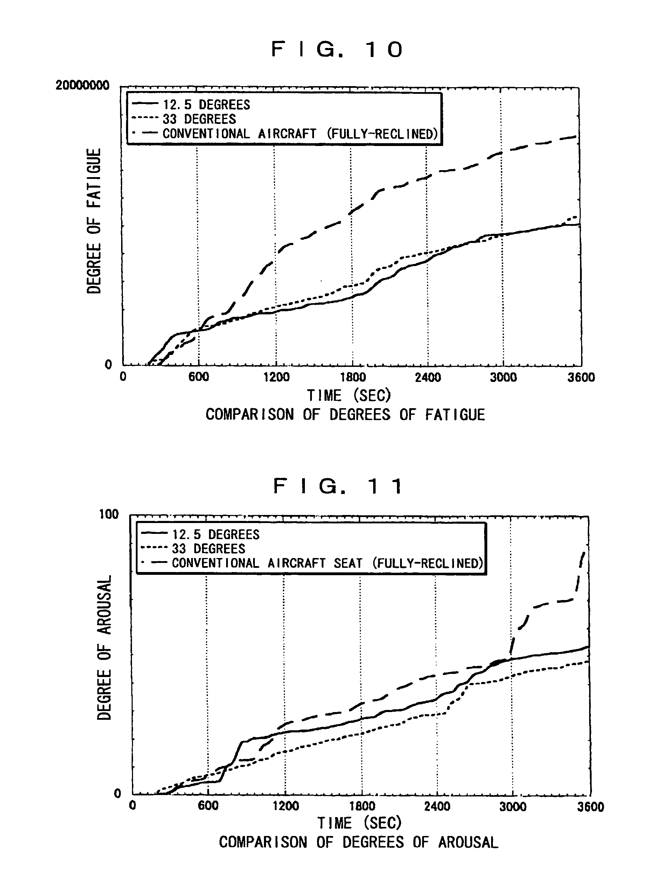

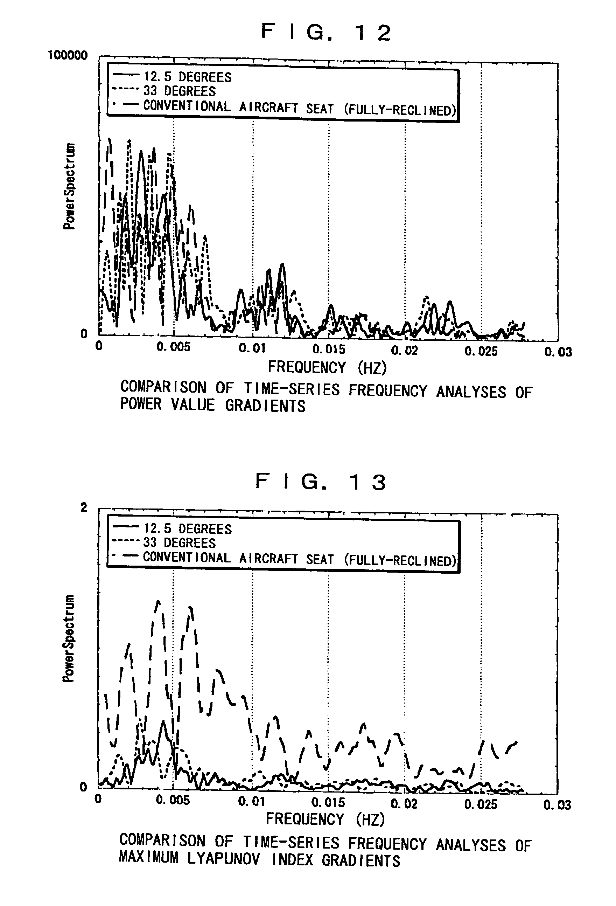

FIG. 10 is a graph showing a transition of the degree of fatigue obtained based on data of FIGS. 7A to 9D; and FIG. 11 is a graph showing a transition of the degree of arousal. FIG. 12 shows an analysis result of the time-series frequency of the power value gradient and FIG. 13 shows an analysis result of the time-series frequency of the maximum Lyapunov indexes. According to these results, the seat structure of the present embodiment causes less accumulated fatigue and provides an excellent comfort.

### (Test Example 3)

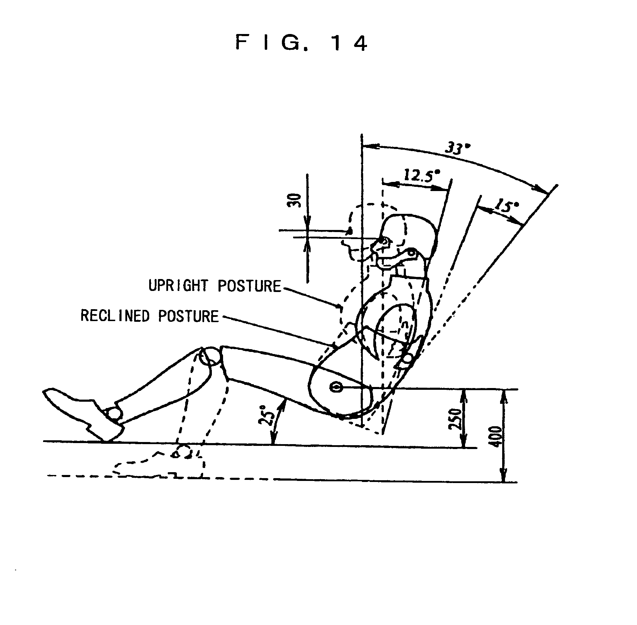

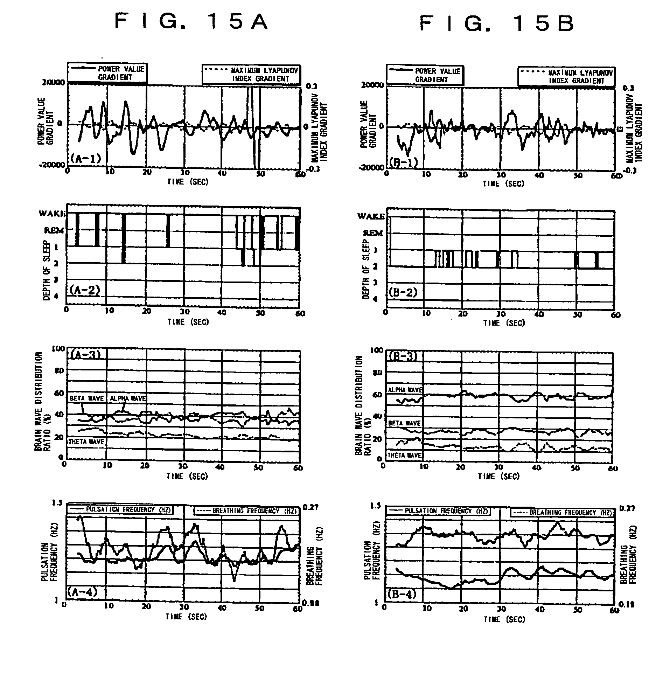

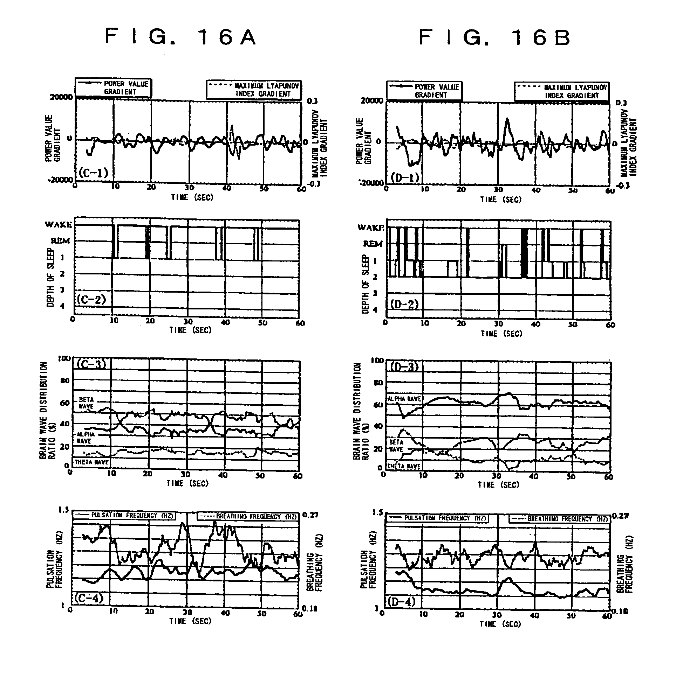

As shown in FIG. 14, the same test with the same subject as the test example 2 was implemented in a condition that the seating surface angle is fixed to 25 degrees and the back angle is changed to 33 degrees and 12.5 degrees. The seating surface angle is fixed to 25 degrees to make the seat applicable as a vehicle seat structure. When the seating surface angle is fixed to from 24 to 28 degrees, preferably at 25 degrees, a wakeful state is obtained when the subject's eyes are opened and a resting state can be obtained when the his eyes are closed both in a first posture with the back angle of 12.5 degrees and in a second posture with back angle of 33 degrees. The results are shown in FIGS. 15A to 16B. FIGS. 15A and 16A show data of the subject when his eyes are opened and FIGS. 15B and 16B show data of the subject when his eyes are closed.

When the back angle was 12.5 degrees, the distribution ratio of the brain waves of the subject with his eyes opened was higher and the distribution ratio of the alpha wave was lower than those of the subject when his eyes were closed. Further, it can be seen that the subject was in the wakeful state according to the depth of his sleep. His pulsations and breathings were faster and show irregular fluctuations compared to the case his eyes were closed and it is assumed that the subject was in a high wakeful state in which he can react changes of external stimuli. Further, it is considered that a temporal transition to a second-stage sleep after 40 minutes passed was cased by fatigue due to a continuation of being in the same posture. On the other hand, regarding the brain waves in a state his eyes were closed, the distribution ratio of the theta wave was slightly increased and a transition to the second stage sleep was found within 5 minutes from the beginning of the test. For the first 30 minutes, his sleep was in the first or second stage and it can be seen that the subject was in a equable sleep state since his pulsations and breathings were slower and the fluctuation of the fingertip pulse waves was small compared to a state his eyes were opened. After 30 minutes passed, his sleep was mainly in the second stage and, since the fluctuation of each index were larger but constant, compared to the former state, his brain was at rest but his body was handling the fatigue due to the continuation of being in the same posture.

When the back angle was 33 degrees, since the distribution ratio of beta wave was high in a state his eyes were opened, the subject was in a high wakeful state, similarly to the case with the angle of 12.5 degrees in a state with his eyes were opened. Further, the amplitude of the time-series of the fingertip volume pulse wave gradient was smaller than the case with the angle of 12.5 degrees and had a constant fluctuation so that it can be said that the subject was in a relaxed wakeful state. On the other hand, in a state his eyes were closed, the time-series of the fingertip volume pulse wave gradient showed hypnagogic symptoms during the first 10 minutes from the beginning of the test. Then the brain wave was shifted to the second-stage sleep but the subject was repeatedly awakened during the sleep and the distribution ratio of the brain wave changed accordingly and irregularly. Since the pulsations and breathings were slower and stable compared to the state his eyes were opened, it is considered that his brain was in a less degree of resting compared to the case with the angle of 12.5 degrees but his body was in the relaxed enable state. According to this test, it is found that, with the two enable postures, an active wakeful state can be maintained when the occupant's eyes are opened and, on the other hand, those postures can provide enable resting postures when the occupant's eyes are closed.

## Claims

1. A seat structure (10) comprising
a seat reference point adjustor configured to shift a seat reference point (B) in a resting posture to be anterior to a seat reference point (B) in a normal posture,
wherein a seating surface angle (I) of a seat cushion and a tilting angle (H) of a seat back seating surface are adjustable between
a normal posture support mode with the seat reference point (B) in the normal posture, and
a resting posture support mode with the seat reference point (B) in the resting posture,
**characterized in that**
in the normal posture support mode, a seat back angle (H) is set to be from 10 to 14 degrees, the seat cushion seating surface angle (I) is set to be from 12 to 15 degrees, and the tilting angle (J) of the seat back seating surface (D) with respect to the seat cushion seating surface is set to be a value equal to or more than 85 degrees and less than 90 degrees,
and that in the resting posture support mode, the seat back angle (H) is set to be from 30 to 34 degrees, the seat cushion seating surface angle (I) is set to be from 22 to 28 degrees, and the tilting angle (J) of the seat back seating surface (D) with respect to the seat cushion seating surface is set to be a value equal to or more than 95 degrees and less than 100 degrees, and further comprising
a lumbar support (200) comprising
a flexible plate member (210) made of synthetic resin and a pair of bulges (211, 212), which have center portions fixed to one surface of the plate member (210),
wherein one of the two bulges (211, 212) is provided near a position corresponding to the third lumbar vertebra of an occupant and the other one of the bulges (211, 212) is provided near a position corresponding to an upper position of the pelvis of the occupant, as sandwiching the fourth lumbar vertebra.

2. The seat structure (10) according to claim 1, wherein
in the normal posture support mode, the seat back angle (H) is set to be 12.5 degrees, the seat cushion seating surface angle (I) is set to be 13 degrees, and the tilting angle (J) of the seat back seating surface (D) with respect to the seat cushion seating surface is set to be 89.5 degrees, and
in the resting posture support mode, the seat back angle (H) is set to be 33 degrees, the seat cushion seating surface angle (I) is set to be 25 degrees, and the tilting angle (J) of the seat back seating surface (D) with respect to the seat cushion seating surface is set to be 98 degrees.

3. The seat structure (10) according to any one of claims 1 to 2, further comprising
a seat cushion member support mechanism comprising
a first torsion bar unit having a torsion bar, an arm connected to the torsion bar, and a supporting frame supported by the arm, the arm being provided pivotally forward and backward about the torsion bar at a rear portion of the seat cushion, and
a second torsion bar unit having a torsion bar, an arm connected to the torsion bar, and a supporting frame supported by the arm, the arm being provided pivotally forward and backward about the torsion bar at a front portion of the seat cushion,
wherein the seat cushion member disposed to the seat cushion is provided extending over the supporting frame of the first torsion bar unit and the supporting frame of the second torsion bar unit.

4. The seat structure (10) according to claim 3, wherein
the seat reference point adjustor is a member shifting the position of the torsion bar of the first torsion bar unit between the rear side and the front side.

5. The seat structure (10) according to any one of claims 1 to 4, wherein
the seat structure is applied to an aircraft or a train.

6. A vehicle seat structure (10) comprising
a seat reference point adjustor configured to shift a seat reference point (B) in a first posture to be anterior to a seat reference point (B) in a second posture,
wherein a tilting angle of a seat back seating surface (D) is adjustable between
a first posture support mode with the seat reference point (B) in the first posture, and
a second posture support mode with the seat reference point (B) in the second posture,
**characterized in that**
a seat cushion seating surface angle (I) is set to be from 24 to 28 degrees, in the first posture support mode a seat back angle (H) is from 10 to 14 degrees, in the second posture support mode the seat back angle (H) is from 30 to 34 degrees; and further comprising
a lumbar support (200) being provided to the seat back and comprising a flexible plate member (210) made of synthetic resin and a pair of bulges (211, 212), which have center portions fixed to one surface of the plate member (210),
wherein one of the two bulges (211, 212) is provided near a position corresponding to the third lumbar vertebra of an occupant and the other one of the bulges (211, 212) is provided near a position corresponding to an upper position of the pelvis of the occupant, as sandwiching the fourth lumbar vertebra.

7. The vehicle seat structure (10) according to claim 6, wherein
the seat back angle (H) in the first posture support mode is set to be 12.5 degrees, the seat back angle in the second posture support mode is set to be 33 degrees, and the seat cushion seating surface angle (I) is set to be 25 degrees.

8. The vehicle seat structure (10) according to claim 6 or 7, further comprising
a seat cushion member support mechanism comprising
a first torsion bar unit having a torsion bar, an arm connected to the torsion bar, and a supporting frame supported by the arm, the arm being provided pivotally forward and backward about the torsion bar at a rear portion of the seat cushion, and
a second torsion bar unit having a torsion bar, an arm connected to the torsion bar, and a supporting frame supported by the arm, the arm being provided pivotally forward and backward about the torsion bar at a front portion of the seat cushion,
wherein the seat cushion member disposed to the seat cushion is provided extending over the supporting frame of the first torsion bar unit and the supporting frame of the second torsion bar unit.

## Patentansprüche

1. Sitzstruktur (10) mit:
einer Sitzbezugspunkt-Einstellvorrichtung, die ausgelegt ist, einen Sitzbezugspunkt (B) in einer Ruhehaltung derart zu verschieben, dass er vor einem Sitzbezugspunkt (B) in einer Normalhaltung liegt,
wobei ein Sitzflächenwinkel (I) eines Sitzkissens und ein Neigungswinkel (H) einer Sitzrückenlehnen-Sitzfläche einstellbar sind zwischen:
einem Normal-Haltungsunterstützungsmodus mit dem Sitzbezugspunkt (B) in der Normalhaltung, und
einem Ruhe-Haltungsunterstützungsmodus mit dem Sitzbezugspunkt (B) in der Ruhehaltung,
**dadurch gekennzeichnet, dass**
in dem Normal-Haltungsunterstützungsmodus ein Sitzrückenlehnen-Winkel (H) derart eingestellt ist, dass er von 10 Grad bis 14 Grad reicht, der Sitzkissen-Sitzflächenwinkel (I) derart eingestellt ist, dass er von 12 Grad bis 15 Grad reicht, und der Neigungswinkel (J) der Sitzrückenlehnen-Sitzfläche (D) bezüglich der Sitzkissen-Sitzfläche derart eingestellt ist, dass er einen Wert größer oder gleich 85 Grad und weniger als 90 Grad aufweist,
und dass in dem Ruhe-Haltungsunterstützungsmodus der Sitzrückenlehnen-Winkel (H) derart eingestellt ist, dass er von 30 Grad bis 34 Grad reicht, der Sitzkissen-Sitzflächenwinkel (I) derart eingestellt ist, dass er von 22 Grad bis 28 Grad reicht, und der Neigungswinkel (J) der Sitzrücklehnen-Sitzfläche (D) bezüglich der Sitzkissen-Sitzfläche derart eingestellt ist, dass er einen Wert größer oder gleich 95 Grad und weniger als 100 Grad aufweist, und ferner mit:
einer Lendenwirbelstütze (200), die aufweist:
ein flexibles Plattenelement (210), das aus Synthetikharz ausgebildet ist, und ein Paar Auswölbungen (211, 212), welche Mittelabschnitte aufweisen, die an eine Fläche des Plattenelements (210) angebracht sind,
wobei eine der beiden Auswölbungen (211, 212) nahe einer Position vorgesehen ist, die dem dritten Lendenwirbel eines Insassens entspricht, und die andere der Auswölbungen (211, 212), den vierten Lendenwirbel dazwischen einschließend, nahe einer Position vorgesehen ist, die einer oberen Position des Beckens des Insassens entspricht.

2. Sitzstruktur (10) nach Anspruch 1, wobei
in dem Normal-Haltungsunterstützungsmodus der Sitzrückenlehnen-Winkel (H) derart eingestellt ist, dass er 12,5 Grad beträgt, der Sitzkissen-Sitzflächenwinkel (I) derart eingestellt ist, dass er 13 Grad beträgt, und der Neigungswinkel (J) der Sitzrückenlehnen-Sitzfläche (D) bezüglich der Sitzkissen-Sitzfläche derart eingestellt ist, dass er 89,5 Grad beträgt, und
in dem Ruhe-Haltungsunterstützungsmodus der Sitzrückenlehnen-Winkel (H) derart eingestellt ist, dass er 33 Grad beträgt, der Sitzkissen-Sitzflächenwinkel (I) derart eingestellt ist, dass er 25 Grad beträgt, und der Neigungswinkel (J) der Sitzrückenlehnen-Sitzfläche (D) bezüglich der Sitzkissen-Sitzfläche derart eingestellt ist, dass er 98 Grad beträgt.

3. Sitzstruktur (10) nach einem der Ansprüche 1 bis 2, ferner mit:
einem Sitzkissenelement-Abstützungsmechanismus, mit:
einer ersten Drehstabfedereinheit mit einer Drehstabfeder, einem mit der Drehstabfeder verbundenen Arm und einem durch den Arm abgestützten Abstützungsrahmen, wobei der Arm um die Drehstabfeder nach vorne und hinten schwenkbar an einem hinteren Abschnitt des Sitzkissens vorgesehen ist, und
einer zweiten Drehstabfedereinheit mit einer Drehstabfeder, einem mit der Drehstabfeder verbundenen Arm und einem durch den Arm abgestützten Abstützungsrahmen, wobei der Arm um die Drehstabfeder nach vorne und hinten schwenkbar an einem vorderen Abschnitt des Sitzkissens vorgesehen ist,
wobei das an dem Sitzkissen angeordnete Sitzkissenelement derart vorgesehen ist, dass es sich über den Abstützungsrahmen der ersten Drehstabfedereinheit und den Abstützungsrahmen der zweiten Drehstabfedereinheit erstreckt.

4. Sitzstruktur (10) nach Anspruch 3, wobei
die Sitzbezugspunkt-Einstellvorrichtung ein Element ist, das die Position der Drehstabfeder der ersten Drehstabfedereinheit zwischen der hinteren Seite und der vorderen Seite verschiebt.

5. Sitzstruktur (10) nach einem der Ansprüche 1 bis 4, wobei die Sitzstruktur in einem Flugzeug oder einem Zug verwandt wird.

6. Fahrzeugsitzstruktur (10) mit
einer Sitzbezugspunkt-Einstellvorrichtung, die ausgelegt ist, einen Sitzbezugspunkt (B) in einer ersten Haltung derart zu verschieben, dass er vor einem Sitzbezugspunkt (B) in einer zweiten Haltung liegt,
wobei ein Neigungswinkel einer Sitzrückenlehnen-Sitzfläche (D) einstellbar ist zwischen:
einem ersten Haltungsunterstützungsmodus mit dem Sitzbezugspunkt (B) in der ersten Haltung, und
einem zweiten Haltungsunterstützungsmodus mit dem Sitzbezugspunkt (B) in der zweiten Haltung,
**dadurch gekennzeichnet, dass**
ein Sitzkissen-Sitzflächenwinkel (I) derart eingestellt ist, dass er von 24 Grad bis 28 Grad reicht, ein Sitzrückenlehnen-Winkel (H) in dem ersten Haltungsunterstützungsmodus von 10 Grad bis 14 Grad reicht, und der Sitzrückenlehnen-Winkel (H) in dem zweiten Haltungsunterstützungsmodus von 30 Grad bis 34 Grad reicht;
und ferner mit:
einer Lendenwirbelstütze (200), die an der Sitzrückenlehne vorgesehen ist und aufweist: ein flexibles Plattenelement (210), das aus Synthetikharz ausgebildet ist, und ein Paar Auswölbungen (211, 212), welche Mittelabschnitte aufweisen, die an einer Fläche des Plattenelements (210) angebracht sind,
wobei eine der beiden Auswölbungen (211, 212) nahe einer Position vorgesehen ist, die dem dritten Lendenwirbel eines Insassens entspricht, und die andere der Auswölbungen (211, 212), den vierten Lendenwirbel dazwischen einschließend, nahe einer Position vorgesehen ist, die einer oberen Position des Beckens des Insassens entspricht.

7. Fahrzeugsitzstruktur (10) nach Anspruch 6, wobei
der Sitzrückenlehnen-Winkel (H) in dem ersten Haltungsunterstützungsmodus auf 12,5 Grad eingestellt ist, der Sitzrückenlehnen-Winkel in dem zweiten Haltungsunterstützungsmodus auf 33 Grad eingestellt ist, und der Sitzkissen-Sitzflächenwinkel (I) auf 25 Grad eingestellt ist.

8. Fahrzeugsitzstruktur (10) nach Anspruch 6 oder 7, ferner mit:
einem Sitzkissenelement-Abstützungsmechanismus, mit:
einer ersten Drehstabfedereinheit mit einer Drehstabfeder, einem mit der Drehstabfeder verbundenen Arm und einem durch den Arm abgestützten Abstützungsrahmen, wobei der Arm um die Drehstabfeder nach vorne und hinten schwenkbar an einem hinteren Abschnitt des Sitzkissens vorgesehen ist, und
einer zweiten Drehstabfedereinheit mit einer Drehstabfeder, einem mit der Drehstabfeder verbundenen Arm und einem durch den Arm abgestützten Abstützungsrahmen, wobei der Arm um die Drehstabfeder nach vorne und hinten schwenkbar an einem vorderen Abschnitt des Sitzkissens vorgesehen ist,
wobei das an dem Sitzkissen angeordnete Sitzkissenelement derart vorgesehen ist, dass es sich über den Abstützungsrahmen der ersten Drehstabfedereinheit und den Abstützungsrahmen der zweiten Drehstabfedereinheit erstreckt.

## Revendications

1. Structure de siège (10) comprenant :
un dispositif de réglage de point de référence de siège configuré pour décaler un point de référence de siège (B) dans une posture de repos pour être placé avant un point de référence de siège (B) dans une posture normale,
dans laquelle un angle de surface d'assise (I) d'un coussin de siège et un angle d'inclinaison (H) d'une surface d'assise de dossier peuvent être réglés entre
un mode de support de posture normale avec le point de référence de siège (B) dans la posture normale, et
un mode de support de posture de repos avec le point de référence de siège (B) dans la posture de repos,
**caractérisée en ce que**
dans le mode de support de posture normale, un angle de dossier (H) est réglé pour être compris entre 10 et 14 degrés, l'angle de surface d'assise de coussin de siège (I) est réglé pour être compris entre 12 et 15 degrés, et l'angle d'inclinaison (J) de la surface d'assise de dossier (D) par rapport à la surface d'assise de coussin de siège est réglé pour être une valeur supérieure ou égale à 85 degrés et inférieure à 90 degrés,
et **en ce que** dans le mode de support de posture de repos, l'angle de dossier (H) est réglé pour être compris entre 30 et 34 degrés, l'angle de surface d'assise de coussin de siège (I) est réglé pour être compris entre 22 et 28 degrés, et l'angle d'inclinaison (J) de la surface d'assise de dossier (D) par rapport à la surface d'assise de coussin de siège est réglé pour être une valeur supérieure ou égale à 95 degrés et inférieure à 100 degrés, et comprenant en outre :
un support lombaire (200) comprenant :
un élément de plaque flexible (210) réalisé en résine synthétique et une paire de renflements (211, 212), qui ont des parties centrales fixées à une surface de l'élément de plaque (210),
dans laquelle l'un parmi les deux renflements (211, 212) est fourni à proximité d'une position correspondant à la troisième vertèbre lombaire d'un occupant et l'autre renflement parmi les renflements (211, 212) est fourni à proximité d'une position correspondant à une position supérieure du bassin de l'occupant, de manière à prendre en tenaille la quatrième vertèbre lombaire.

2. Structure de siège (10) selon la revendication 1, dans laquelle
dans le mode de support de posture normale, l'angle de dossier (H) est réglé pour être égal à 12,5 degrés, l'angle de surface d'assise de coussin de siège (I) est réglé pour être égal à 13 degrés, et l'angle d'inclinaison (J) de la surface d'assise de dossier (D) par rapport à la surface d'assise de coussin de siège est réglé pour être égal à 89,5 degrés, et
dans le mode de support de posture de repos, l'angle de dossier (H) est réglé pour être égal à 33 degrés, l'angle de surface d'assise de coussin de siège (I) est réglé pour être égal à 25 degrés, et l'angle d'inclinaison (J) de la surface d'assise de dossier (D) par rapport à la surface d'assise de coussin de siège est réglé pour être égal à 98 degrés.

3. Structure de siège (10) selon l'une quelconque des revendications 1 à 2, comprenant en outre :
un mécanisme de support d'élément de coussin de siège comprenant :
une première unité à barre de torsion ayant une barre de torsion, un bras relié à la barre de torsion, et un cadre de support supporté par le bras, le bras étant fourni par pivotement vers l'avant et vers l'arrière autour de la barre de torsion au niveau d'une partie arrière du coussin de siège, et
une deuxième unité à barre de torsion ayant une barre de torsion, un bras relié à la barre de torsion, et un cadre de support supporté par le bras, le bras étant fourni par pivotement vers l'avant et vers l'arrière autour de la barre de torsion au niveau d'une partie avant du coussin de siège,
dans laquelle l'élément de coussin de siège disposé sur le coussin de siège est fourni de manière à s'étendre sur le cadre de support de la première unité à barre de torsion et le cadre de support de la deuxième unité à barre de torsion.

4. Structure de siège (10) selon la revendication 3, dans laquelle
le dispositif de réglage de point de référence de siège est un élément décalant la position de la barre de torsion de la première unité à barre de torsion entre le côté arrière et le côté avant.

5. Structure de siège (10) selon l'une quelconque des revendications 1 à 4, dans laquelle
la structure de siège est appliquée à un aéronef ou à un train.

6. Structure de siège de véhicule (10) comprenant :
un dispositif de réglage de point de référence de siège configuré pour décaler un point de référence de siège (B) dans une première posture pour être placé avant un point de référence de siège (B) dans une deuxième posture,
dans laquelle un angle d'inclinaison d'une surface d'assise de dossier (D) peut être réglé entre
un mode de support de première posture avec le point de référence de siège (B) dans la première posture, et
un mode de support de deuxième posture avec le point de référence de siège (B) dans la deuxième posture,
**caractérisée en ce que**
un angle de surface d'assise de coussin de siège (I) est réglé pour être compris entre 24 et 28 degrés, dans le mode de support de première posture, un angle de dossier (H) est compris entre 10 et 14 degrés, dans le mode de support de deuxième posture, l'angle de dossier (H) est compris entre 30 et 34 degrés ; et comprenant en outre
un support lombaire (200) étant fourni au dossier et comprenant un élément de plaque flexible (210) réalisé en résine synthétique et une paire de renflements (211, 212), qui ont des parties centrales fixées à une surface de l'élément de plaque (210),
dans laquelle l'un parmi les deux renflements (211, 212) est fourni à proximité d'une position correspondant à la troisième vertèbre lombaire d'un occupant et l'autre renflement parmi les renflements (211, 212) est fourni à proximité d'une position correspondant à une position supérieure du bassin de l'occupant, de manière à prendre en tenaille la quatrième vertèbre lombaire.

7. Structure de siège de véhicule (10) selon la revendication 6, dans laquelle
l'angle de dossier (H) dans le mode de support de première posture est réglé pour être égal à 12,5 degrés, l'angle de dossier dans le mode de support de deuxième posture est réglé pour être égal à 33 degrés, et l'angle de surface d'assise de coussin de siège (I) est réglé pour être égal à 25 degrés.

8. Structure de siège de véhicule (10) selon la revendication 6 ou 7, comprenant en outre :
un mécanisme de support d'élément de coussin de siège comprenant :
une première unité à barre de torsion ayant une barre de torsion, un bras relié à la barre de torsion, et un cadre de support supporté par le bras, le bras étant fourni par pivotement vers l'avant et vers l'arrière autour de la barre de torsion au niveau d'une partie arrière du coussin de siège, et
une deuxième unité à barre de torsion ayant une barre de torsion, un bras relié à la barre de torsion, et un cadre de support supporté par le bras, le bras étant fourni par pivotement vers l'avant et vers l'arrière autour de la barre de torsion au niveau d'une partie avant du coussin de siège,
dans laquelle l'élément de coussin de siège disposé sur le coussin de siège est fourni de manière à s'étendre sur le cadre de support de la première unité à barre de torsion et le cadre de support de la deuxième unité à barre de torsion.
